# EUROPEAN PATENT APPLICATION

(11) **EP 4 572 423 A1**
(43) Date of publication of application: **18.06.2025**
(21) Application number: 23852917.6
(22) Date of filing: 07.08.2023
(51) Int. Cl.: H04W 52/02, H04W 24/08, H04W 72/23, H04W 76/28, H04W 72/04

(54) **METHOD AND DEVICE FOR SETTING NES MODE IN WIRELESS COMMUNICATION SYSTEM**

(30) Priority: 10.08.2022 KR 20220100219; 29.09.2022 KR 20220124779; 03.11.2022 KR 20220145590
(71) Applicant: LG Electronics Inc., Yeongdeungpo-gu Seoul 07336 (KR)
(72) Inventor: CHOI, Seunghwan, Seoul 06772 (KR); YANG, Suckchel, Seoul 06772 (KR); KIM, Seonwook, Seoul 06772 (KR)
(74) Representative: Plasseraud IP
(86) International application number: PCT/KR2023/011590
(87) International publication number: WO 2024/035038

(57) **Abstract**

A method and device for setting a network energy saving (NES) mode in a wireless communication system, disclosed in the present specification, comprises an operation of performing search space set group (SSSG) switching on the basis of an SSSG switching flag field, and an operation of switching the NES mode on the basis of the SSSG switching.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

An object of the present disclosure is to provide a method and apparatus for efficiently performing power saving in a wireless communication system.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for configuring a network energy saving (NES) mode in a wireless communication system.

In an aspect of the present disclosure, provided herein is a method of configuring an NES mode by a user equipment (UE) in a wireless communication system. The method includes: receiving downlink control information (DCI) including a search space set group (SSSG) switching flag field; performing SSSG switching based on a value of the SSSG switching flag field, wherein physical downlink control channel (PDCCH) monitoring according to search space sets with a first group index is started, and PDCCH monitoring according to search space sets with a second group index is stopped; and based on the SSSG switching, performing switching from a second NES mode related to the search space sets with the second group index to a first NES mode related to the search space sets with the first group index.

In another aspect of the present disclosure, provided herein are an apparatus, processor, and storage medium for performing the NES mode configuration method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to an embodiment of the present disclosure, more efficient power saving may be achieved based on the configuration of a network energy saving (NES) mode in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIG. 4 is diagrams illustrating methods for transmitting and receiving a signal according to the embodiments of the present disclosure.
FIGS. 5 to 8 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

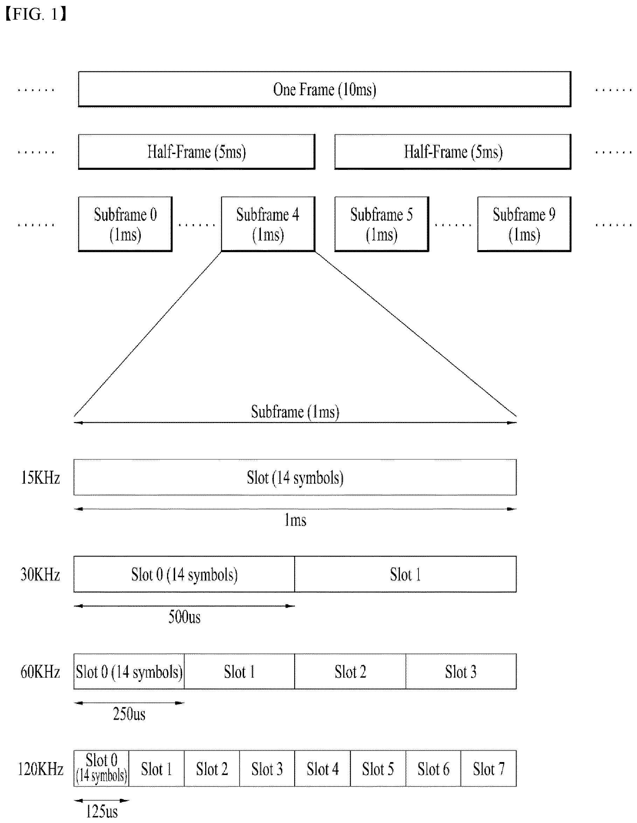

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 1.5KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

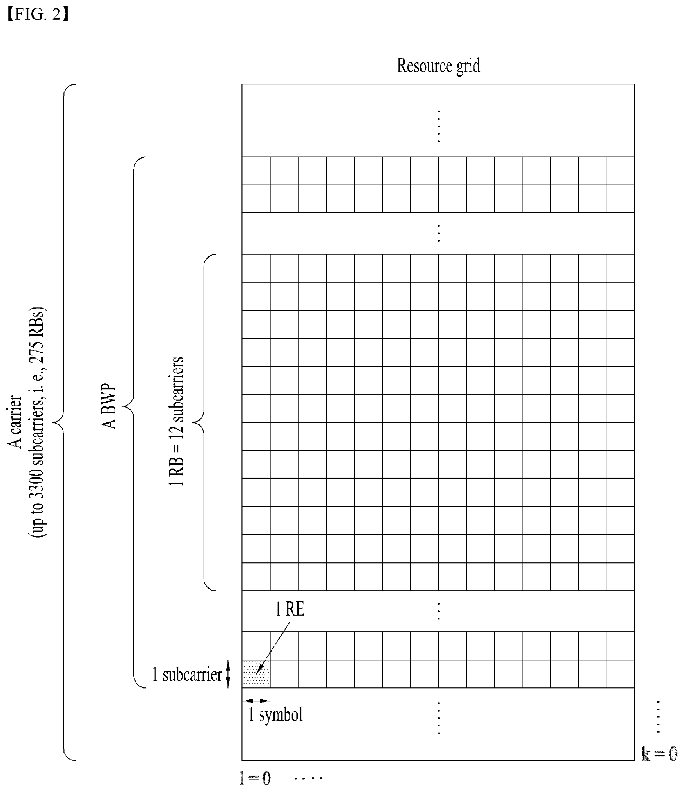

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m ∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

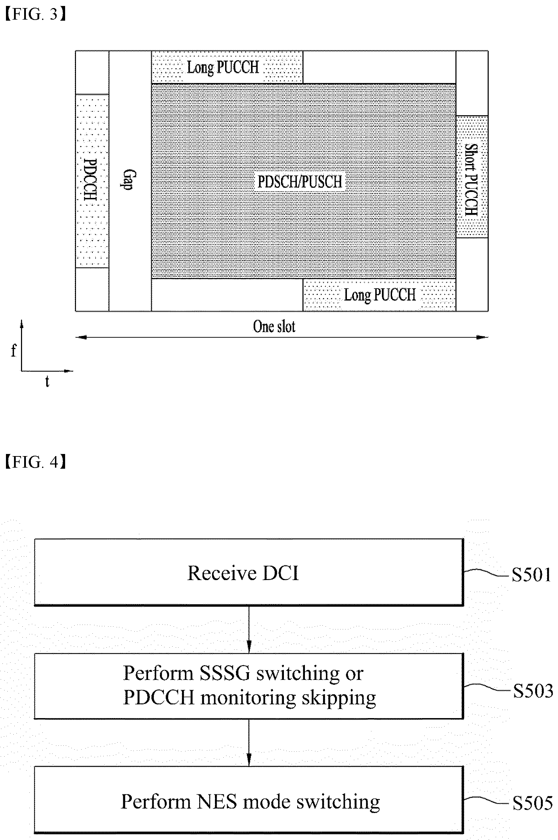

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### Switching of Network Energy Saving (NES) Mode.

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

New technologies and operational methods may be discussed in the future to improve energy saving capabilities from the perspective of transmission and reception at the BS. The following is the justification for the study item approved in Rel-18 for this purpose.

**[Table 4]**

| |
|---|
| Excerpt from RP-213554 |
| Network energy saving is of great importance for environmental sustainability, to reduce environmental impact (greenhouse gas emissions), and for operational cost savings. As 5G is becoming pervasive across industries and geographical areas, handling more advanced services and applications requiring very high data rates (e.g. XR), networks are being denser, use more antennas, larger bandwidths and more frequency bands. The environmental impact of 5G needs to stay under control, and novel solutions to improve network energy savings need to be developed. |
| Energy consumption has become a key part of the operators' OPEX. According to the report from GSMA [1], the energy cost on mobile networks accounts for ~23% of the total operator cost. Most of the energy consumption comes from the radio access network and in particular from the Active Antenna Unit (AAU), with data centres and fibre transport accounting for a smaller share. The power consumption of a radio access can be split into two parts: the dynamic part which is only consumed when data transmission/reception is ongoing, and the static part which is consumed all the time to maintain the necessary operation of the radio access devices, even when the data transmission/reception is not on-going. |
| Therefore, there is a need to study and develop a network energy consumption model especially for the base station (a UE power consumption model was already defined in TR38.840), KPIs, an evaluation methodology and to identify and study network energy savings techniques in targeted deployment scenarios. The study should investigate how to achieve more efficient operation dynamically and/or semi-statically and finer granularity adaptation of transmissions and/or receptions in one or more of network energy saving techniques in time, frequency, spatial, and power domains, with potential support/feedback from UE, potential UE assistance information, and information exchange/coordination over network interfaces. |
| The study should not only evaluate the potential network energy consumption gains, but also assess and balance the impact on network and user performance, e.g. by looking at KPIs such as spectral efficiency, capacity, user perceived throughput (UPT), latency, UE power consumption, complexity, handover performance, call drop rate, initial access performance, SLA assurance related KPIs, etc. The techniques to be studied should avoid having a large impact to such KPIs |

The present disclosure proposes technologies and configuration/operational methods capable of being introduced for the purpose of energy saving at the BS.

For energy saving at the BS, a network energy saving (NES) mode (i.e., a mode for energy saving at the BS) may be defined. A BS operating in the NES mode may reduce the power consumption thereof by suspending (holding) DL or UL transmission for a specific period or limiting transmission and reception operations in specific frequency bands. In the present disclosure, the NES mode may refer to the operational mode of the BS and/or UE that is defined/configured/indicated for such a purpose. Additionally, in the present disclosure, the operational mode of the UE (or cell) where the NES mode (or NES-based configuration) is not configured is referred to as non-NES mode to distinguish the operational mode from the NES mode.

The NES mode may be maintained only for a specific time period. In the proposals described later, a time period during which the BS operates in the NES mode is referred to as a NES duration. The NES mode may be valid only for specific frequency resources. In the proposals described later, frequency resources corresponding to the NES mode are referred to as an NES band.

The NES mode may be configured by the BS through separate higher layer signaling or higher layer configurations. Alternatively, the NES mode may be dynamically configured to the BS/UE through other control channels (e.g., DCI-based indication) or data channels (e.g., PDSCH, PUSCH). During the NES mode, the BS may turn on/off specific time, frequency, antenna resources, etc., and may not transmit/receive related data channels, control channels, or control signals. During the NES mode, the UE may operate by expecting that specific time/frequency/antenna resources will be turned on/off and that related channels/signals will not be transmitted.

A BWP for the NES mode (NES-BWP) may be defined/configured for UE having defined/configured the NES mode. The NES-BWP may be set as a separate BWP that operates only in the NES mode. In this case, a BWP for the non NES mode may not be defined or deactivated. Alternatively, a specific (single) BWP may be configured differently for the NES mode and non-NES mode. For example, a specific BWP may be set as the NES-BWP during the NES duration and set as a different BWP during other durations. The configuration methods and constraints of the NES-BWP may be defined/configured separately from the conventional BWP. For example, in the NES-BWP, PDCCH monitoring may not be performed, but aperiodic CSI-RS signals and reports may be configured. As another example, the periodicity of a periodic CSI-RS may be reinterpreted in the NES-BWP.

A unique BWP switching operation in the NES mode may be defined. For example, in the conventional BWP switching configuration/operation, when a BWP other than the default BWP is the active BWP, a timer is set. If the timer expires, the current active BWP is switched to inactive, and the default BWP reverts to the new active BWP. On the other hand, in the NES mode, if the timer expires, the current active BWP may be switched to inactive, and the dormant BWP or NES-BWP may switch to the new active BWP. Alternatively, if the timer expires, the current active BWP may switch to inactive, and the default BWP may switch to the new active BWP (as in the conventional operation). If no DL/UL transmission is scheduled/configured in the default BWP for a certain period, the default BWP may switch to inactive, and the dormant BWP or NES-BWP may switch to the new active BWP.

The proposed methods described later may be applied independently under the conditions described for each method or configured only during the NES duration. Alternatively, the methods may be applied only in the NES band.

In the proposed methods described later, operating in the non-NES mode means arbitrary NR configurations/operations that are not configured for NES (e.g., configurations/operations specified in Rel-15, Rel-16, or Rel-17 NR specifications). In the proposed methods described later, an operation of switching to the NES mode may only be applied to UEs/cells configured for NES. Additionally, the NES mode is not limited to specific configurations or operational methods. That is, the NES mode may be any configuration or operational method defined/configured for NES. In the proposed methods described later, switching to the NES mode may also be understood as switching to the NES-BWP.

Table 5 shows search space set group (SSSG) switching and PDCCH skipping operations extracted from 3GPP TS 38.213 V17.2.0. Table 6 shows the minimum value of P_switch in Table 10.4-1 of 3GPP TS 38.213 V17.2.0. Specifically, Table 6 shows the minimum value of P_switch in symbol units.

**[Table 5]**

| | | |
|---|---|---|
| 10.4 Search space set group switching and skipping of PDCCH monitoring | | |
| A UE can be provided a group index for a respective Type3-PDCCH CSS set or USS set by *searchSpaceGroupIdList* for PDCCH monitoring on a serving cell. If the UE is not provided *searchSpaceGroupIdList* for a search space set, the following procedures are not applicable for PDCCH monitoring according to the search space set. | | |
| If a UE is provided *cellGroupsForSwitchList,* indicating one or more groups of serving cells, the following procedures apply to all serving cells within each group; otherwise, the following procedures apply only to a serving cell for which the UE is provided *searchSpaceGroupldList.* | | |
| When a UE is provided *searchSpaceGroupIdList,* the UE resets PDCCH monitoring according to search space sets with group index 0, if provided by *searchSpaceGroupIdList.* | | |
| A UE can be provided by *searchSpaceSwitchDelay* a number of symbols *P_{switch}* where a minimum value of *P_{switch}* is provided in Table 10.4-1 for UE processing capability 1 and UE processing capability 2 and SCS configuration *µ*. UE processing capability 1 for SCS configuration *µ* applies unless the UE indicates support for UE processing capability 2. | | |
| A UE can be provided, by *searchSpaceSwitchTimer,* a timer value for a serving cell that the UE is provided *searchSpaceGroupIdList* or, if provided, for a set of serving cells provided by *cellGroupsForSwitchList.* The UE decrements the timer value by one after each slot based on a reference SCS configuration that is the smallest SCS configuration *µ* among all configured DL BWPs in the serving cell, or in the set of serving cells. The UE maintains the reference SCS configuration during the timer decrement procedure. | | |
| If a UE is provided by *SearchSpaceSwitchTrigger* a location of a search space set group switching flag field in a DCI format 2_0, as described in clause 11.1.1, for a serving cell where the UE has active DL BWP with SCS configuration *µ* | | |
| | - if the UE detects a DCI format 2_0 and a value of the search space set group switching flag field in the DCI format 2_0 is 0, the UE starts monitoring PDCCH according to search space sets with group index 0, and stops monitoring PDCCH according to search space sets with group index 1, for the serving cell | |
| | | - at the beginning of the first slot that is at least *P_{switch}* symbols after the last symbol of the PDCCH with the DCI format 2_0 when *µ* ∈ {0, 1, 2, 3} |
| | | - at the beginning of the first slot, of a group of *Xₛ* slots, that is at least *P_{switch}* symbols after the last symbol of the PDCCH with the DCI format 2_0 when *µ* ∈ {5, 6} |
| | - if the UE detects a DCI format 2_0 and a value of the search space set group switching flag field in the DCI format 2_0 is 1, the UE starts monitoring PDCCH according to search space sets with group index 1, and stops monitoring PDCCH according to search space sets with group index 0, for the serving cell | |
| | | - at the beginning of the first slot that is at least *P_{switch}* symbols after the last symbol of the PDCCH with the DCI format 2_0, when *µ* ∈ {0, 1, 2, 3} |
| | | - at the beginning of the first slot, of a group of *Xₛ* slots, that is at least *P_{switch}* symbols after the last symbol of the PDCCH with the DCI format 2_0 when *µ* ∈ {5, 6} |
| | | and the UE sets the timer value to the value provided by *searchSpaceSwitchTimer* |
| | - if the UE monitors PDCCH for a serving cell according to search space sets with group index 1, the UE starts monitoring PDCCH for the serving cell according to search space sets with group index 0, and stops monitoring PDCCH according to search space sets with group index 1, for the serving cell | |
| | | - at the beginning of the first slot that is at least *P_{switch}* symbols after a slot where the timer expires or after a last symbol of a remaining channel occupancy duration for the serving cell if indicated by DCI format 2_0 when *µ* ∈ {0, 1, 2, 3} |
| | | - at the beginning of the first slot, of a group of *Xₛ* slots, that is at least *P_{switch}* symbols after a slot where the timer expires or after a last symbol of a remaining channel occupancy duration for the serving cell if indicated by DCI format 2_0 when *µ* ∈ {5, 6} |
| If a UE is not provided *SearchSpaceSwitchTrigger* for a serving cell, | | |
| | - if the UE detects a DCI format by monitoring PDCCH according to a search space set with group index 0, the UE starts monitoring PDCCH according to search space sets with group index 1, and stops monitoring PDCCH according to search space sets with group index 0, for the serving cell | |
| | | - at the beginning of the first slot that is at least *P_{switch}* symbols after the last symbol of the PDCCH with the DCI format when *µ* ∈ {0, 1, 2, 3}, |
| | | - at the beginning of the first slot, of a group of *Xₛ* slots, that is at least *P_{switch}* symbols after the last symbol of the PDCCH with the DCI format when *µ* ∈ {5, 6} |
| | | the UE sets the timer value to the value provided by *searchSpaceSwitchTimer* if the UE detects a DCI format by monitoring PDCCH in any search space set |
| | - if the UE monitors PDCCH for a serving cell according to search space sets with group index 1, the UE starts monitoring PDCCH for the serving cell according to search space sets with group index 0, and stops monitoring PDCCH according to search space sets with group index 1, for the serving cell | |
| | | - at the beginning of the first slot that is at least *P_{switch}* symbols after a slot where the timer expires or, if the UE is provided a search space set to monitor PDCCH for detecting a DCI format 2_0, after a last symbol of a remaining channel occupancy duration for the serving cell if indicated by DCI format 2_0 when *µ* ∈ {0, 1, 2, 3} |
| | | - at the beginning of the first slot, of a group of *Xₛ* slots, that is at least *P_{switch}* symbols after a slot where the timer expires or, if the UE is provided a search space set to monitor PDCCH for detecting a DCI format 2_0, after a last symbol of a remaining channel occupancy duration for the serving cell if indicated by DCI format 2_0 when *µ* ∈ {5, 6} |
| A UE determines a slot and a symbol in the slot to start or stop PDCCH monitoring according to search space sets for a serving cell that the UE is provided *searchSpaceGroupIdList* or, if *cellGroupsForSwitchList* is provided, for a set of serving cells, based on the smallest SCS configuration *µ* among all configured DL BWPs in the serving cell or in the set of serving cells and, if any, in the serving cell where the UE receives a | | |
| PDCCH and detects a corresponding DCI format 2_0 triggering the start or stop of PDCCH monitoring according to search space sets. | | |
| A UE can be provided a set of durations by *PDCCHSkippingDurationList* for PDCCH monitoring on an active DL BWP of a serving cell and, if the UE is not provided *searchSpaceGroupIdList-r17* on the active DL BWP of the serving cell, a DCI format 0_1 and a DCI format 0_2 that schedule PUSCH transmission, and a DCI format 1_1 and a DCI format 1_2 that schedule PDSCH receptions can include a PDCCH monitoring adaptation field of 1 bit or of 2 bits. | | |
| If the field has 1 bit and for PDCCH monitoring by the UE according to Type3-PDCCH CSS sets or USS sets on the active DL BWP of the serving cell | | |
| | - a '0' value for the bit indicates no skipping in PDCCH monitoring | |
| | - a '1' value for the bit indicates skipping PDCCH monitoring for a duration provided by the first value in the set of durations | |
| If the field has 2 bits and for PDCCH monitoring by the UE according to Type3-PDCCH CSS sets or USS sets on the active DL BWP of the serving cell | | |
| | - a '00' value for the bits indicates no skipping in PDCCH monitoring | |
| | - a '01' value for the bits indicates skipping PDCCH monitoring for a duration provided by the first value in the set of durations | |
| | - a '10' value for the bits indicates skipping PDCCH monitoring for a duration provided by the second value in the set of durations | |
| | - a '11' value for the bits indicates skipping PDCCH monitoring for a duration provided by the third value in the set of durations, if any; otherwise, if the set of durations includes two values, a use of the '11' value is reserved | |
| A UE can be provided group indexes for a Type3-PDCCH CSS set or USS set by *searchSpaceGroupIdList-r17* for PDCCH monitoring on an active DL BWP of a serving cell and, if the UE is not provided | | |
| *PDCCHSkippingDurationList* for the active DL BWP of the serving cell, a DCI format 0_1 and a DCI format 0_2 that schedule PUSCH transmissions and a DCI format 1_1 and a DCI format 1_2 that schedule PDSCH receptions can include a PDCCH monitoring adaptation field of 1 bit or of 2 bits for the serving cell. | | |
| If the field has 1 bit and for PDCCH monitoring by the UE according to Type3-PDCCH CSS sets or USS sets on the active DL BWP of the serving cell | | |
| | - a '0' value for the bit indicates start of PDCCH monitoring according to search space sets with group index 0 and stop of PDCCH monitoring according to search space sets with other group indexes, if any | |
| | - a '1' value for the bit indicates start of PDCCH monitoring according to search space sets with group index 1 and stop of PDCCH monitoring according to search space sets with other group indexes, if any, and the UE sets the timer value to the one provided by *searchSpaceSwitchTimer-r17* | |
| If the field has 2 bits and for PDCCH monitoring by the UE according to Type3-PDCCH CSS sets or USS sets on the active DL BWP of the serving cell | | |
| | - a '00' value for the bit indicates start of PDCCH monitoring according to search space sets with group index 0 and stop of PDCCH monitoring according to search space sets with other group indexes, if any | |
| | - a '01' value for the bit indicates start of PDCCH monitoring according to search space sets with group index 1 and stop of PDCCH monitoring according to search space sets with other group indexes, if any, and the UE sets the timer value to the one provided by *searchSpaceSwitchTimer-r17* | |
| | - a '10' value for the bit indicates start of PDCCH monitoring according to search space sets with group index 2 and stop of PDCCH monitoring according to search space sets with other group indexes, if any, and the UE sets the timer value to the one provided by *searchSpaceSwitchTimer-r17* | |
| | - a '11' value is reserved | |
| A UE can be provided a set of durations by *PDCCHSkippingDurationList* and group indexes for a Type3-PDCCH CSS set or USS set by *searchSpaceGroupIdList-r17* for PDCCH monitoring on an active DL BWP of a serving cell and, a DCI format 0_1 and a DCI format 0_2 that schedule PUSCH transmissions, and a DCI format 1_1 and a DCI format 1_2 that schedule PDSCH receptions can include a PDCCH monitoring adaptation field of 2 bits. | | |
| If the set of durations includes one value and for PDCCH monitoring by the UE according to Type3-PDCCH CSS sets or USS sets on the active DL BWP of the serving cell | | |
| | - a '00' value for the bits indicates start of PDCCH monitoring according to search space sets with group index 0 and stop of PDCCH monitoring according to search space sets with group index 1, if any | |
| | - a '01' value for the bits indicates start of PDCCH monitoring according to search space sets with group index 1 and stop of PDCCH monitoring according to search space sets with group index 0, if any, and the UE sets the timer value to the one provided by *searchSpaceSwitchTimer-r17* | |
| | - a '10' value for the bits indicates skipping PDCCH monitoring for a duration provided by the value in the set of durations | |
| | - a '11' value is reserved | |
| If the set of durations includes two values and for PDCCH monitoring by the UE according to Type3-PDCCH CSS sets or USS sets on active DL BWP of the the serving cell | | |
| | - a '00' value for the bits indicates start of PDCCH monitoring according to search space sets with group index 0 and stop of PDCCH monitoring according to search space sets with group index 1, if any | |
| | - a '01' value for the bits indicates start of PDCCH monitoring according to search space sets with group index 1 and stop of PDCCH monitoring according to search space sets with group index 0, if any, and the UE sets the timer value to the one provided by *searchSpaceSwitchTimer-r17* | |
| | - a '10' value for the bits indicates skipping PDCCH monitoring for a duration provided by the first value in the set of durations | |
| | - a '11' value for the bits indicates skipping PDCCH monitoring for a duration provided by the second value in the set of durations | |
| When the PDCCH monitoring adaptation field indicates to a UE to start PDCCH monitoring according to search space sets with a first group index and stop PDCCH monitoring according to search space sets with a second group index, the UE applies the indication | | |
| | - at the beginning of a first slot that is at least *P_{switch}* symbols after the last symbol of the PDCCH reception providing the DCI format with the PDCCH monitoring adaptation field when *µ* ∈ {0, 1, 2, 3}, | |
| | - at the beginning of a first slot, of a slot group of *Xₛ* slots, that is at least *P_{switch}* symbols after the last symbol of the PDCCH reception providing the DCI format with the PDCCH monitoring adaptation field when *µ* ∈ {5, 6} | |
| When the PDCCH monitoring adaptation field indicates to a UE to skip PDCCH monitoring for a duration on the active DL BWP of a serving cell, the UE starts skipping of PDCCH monitoring at the beginning of a first slot that is after the last symbol of the PDCCH reception providing the DCI format with the PDCCH monitoring adaptation field. If the UE transmits a PUCCH providing a positive SR after the UE detects a DCI format providing the PDCCH monitoring adaptation field indicating to the UE to skip PDCCH monitoring for the duration on the active DL BWP of the serving cell, the UE resumes PDCCH monitoring starting at the beginning of a first slot that is after a last symbol of the PUCCH transmission. | | |
| If a UE is provided group indexes for a Type3-PDCCH CSS set or a USS set by *searchSpaceGroupIdList-r17* and a timer value by *searchSpaceSwitchTimer-r17* for PDCCH monitoring an active DL BWP of on a serving cell and the timer is running, the UE | | |
| | - resets the timer after a slot of the active DL BWP of the serving cell if the UE detects a DCI format in a PDCCH reception in the slot for with CRC scrambled by C-RNTI/CS-RNTI/MCS-C-RNTI | |
| | - otherwise, decrements the timer value by one after a slot of the active DL BWP of the serving cell | |
| When the timer expires in a first slot, the UE monitors PDCCH on the serving cell according to search space sets with group index 0 starting in a second slot that | | |
| | - is not earlier than *P_{switch}* symbols after the first slot when *µ* ∈ {0, 1, 2, 3}, | |
| | - is a first slot in a slot group of *Xₛ* slots that is not earlier than *P_{switch}* symbols after the first slot when *µ* ∈ {5, 6}, | |
| | - is not earlier than a slot where a PDCCH skipping duration expires, if applicable | |
| When a UE receives | | |
| | - a first PDCCH in a first slot that provides a DCI format with a PDCCH monitoring adaptation field having a first value indicating skipping PDCCH monitoring, or indicating start of PDCCH monitoring according to a search space sets with a first group index and stop of PDCCH monitoring according to search space sets with a second group index, for an active DL BWP and | |
| | - a second PDCCH that provides a DCI format with a PDCCH monitoring adaptation field having a second value indicating skipping PDCCH monitoring, or indicating start of PDCCH monitoring according to search space sets with a first group index and stop of PDCCH monitoring according to search space sets with a second group index different than the first group index, for the active DL BWP where the second PDCCH is received | |
| | | - in the first slot if the first value indicates skipping PDCCH monitoring |
| | | - before a slot that is at least *P_{switch}* symbols after the first slot if the first value indicates start of PDCCH monitoring according to search space sets with a first group index |
| the UE does not expect the second value to be different than the first value. A UE does not expect to receive in a second slot a PDCCH on an active DL BWP that provides a DCI format indicating skipping PDCCH monitoring, or start of PDCCH monitoring according to search space sets with | | |
| group index 1 or 2 for the active DL BWP, if the second slot is not at least *P_{switch}* symbols after a first slot where the timer expires. | | |

**[Table 6]**

| ***µ*** | **Minimum P_{switch} value for UE processing capability 1 [symbols]** | **Minimum P_{switch} value for UE processing capability 2 [symbols]** |
|---|---|---|
| 0 | 25 | 10 |
| 1 | 25 | 12 |
| 2 | 25 | 22 |
| 3 | 40 | - |
| 5 | 160 | - |
| 6 | 320 | - |

The two operations capable of adjusting PDCCH monitoring of the UE may be extended/modified and applied for the purpose of controlling the energy consumption of the BS. Method [1-1] described later is a method to extend/modify the SSSG switching operation for the NES mode, which may be easily applied to aperiodic switching between the NES mode and non-NES mode. However, the application of the proposed method is not limited to these cases. Method [1-2] described later is a method to extend/modify the PDCCH skipping operation for the NES mode, which may be easily applied to periodic switching between the NES mode and non-NES mode. However, the application of the proposed method is not limited to these cases.

In the proposed methods described later, the NES mode (NES operation or NES configuration) is not limited to values/methods for configuring specific parameters or particular operations. The NES mode may refer to parameters configured to reduce the power of the BS or operations of the BS/UE defined to reduce the power of the BS. For example, for the cell (or UE) with configured with the NES mode, the BS may not transmit channels/signals such as an SSB during a specific period. Alternatively, the periodicity configured for the NES mode may be defined to be longer than the periodicity configured for the non-NES mode via RRC signaling. As another example, when the NES mode is configured, the default BWP of the cell may be changed to a specific BWP (for NES purposes).

In the proposed methods described later, the expression "a specific parameter (or operation) is configured" may be understood as meaning that the parameter (or operation) is configured for an arbitrary cell, for a specific UE, for a configured cell of a specific UE, for a configured DL (or UL) BWP of a specific cell, or for an active DL (or UL) BWP of a specific cell.

In the proposed methods described later, a MAC CE or DCI (e.g., indicating a group index or activating/deactivating a specific operation) may be transmitted in a UE-specific, UE group-common, or cell-specific manner. The DCI may be scrambled with an RNTI configured in a UE-specific, UE group-common, or cell-specific manner and then transmitted. The MAC CE may be transmitted over a PDSCH scheduled by DCI scrambled with an RNTI configured in a UE-specific, UE group-common, or cell-specific manner.

SSSG switching and PDCCH skipping have been introduced in NR as methods to reduce power consumption caused by PDCCH monitoring of the UE. The SSSG switching involves grouping multiple SS sets with different configuration values and changing the PDCCH monitoring periodicity of the UE based on switching between the groups. The PDCCH skipping involves skipping the monitoring operation of the UE for a certain period (based on switching between SS set groups in a similar manner).

### [1] Switching to NES mode (or non-NES mode) using SSSG switching

For SSSG switching, some (or specific) SSSGs configured for the UE may be configured to be used for the NES mode, while other (or different specific) SSSGs may be configured to be used for the non-NES mode. Switching between the NES mode and non-NES mode may be indicated by SSSG switching between SSSGs for different modes. For example, the start of the NES mode or the end of the NES mode may be indicated by SSSG switching,

As a specific example, the SSSG switching operation is configured for the UE, and switching between SSSG#0 and SSSG#1 may be configured. SSSG#0 is configured as a group of SS sets configured in a DL BWP for the non-NES mode. SSSG#1 is configured as a group of SS sets configured in an NES-BWP for the NES mode. Switching from the non-NES mode to the NES mode may be instructed by the switching operation between SSSG#0 and SSSG#1 (e.g., SSSG#0 → SSSG#1 switching). Additionally, switching from the NES mode to the non-NES mode may also be instructed by the switching operation between SSSG#0 and SSSG#1 (e.g., SSSG#1 → SSSG#0 switching). For mechanisms for the SSSG switching, triggering conditions, and/or related parameter configuration values (e.g., P_switch), the methods in Table 4 may be used. Alternatively, for UEs configured with the NES mode, switching mechanisms, triggering conditions, and/or related parameter configuration values different from those in Table 4 may be used.

The SSSG switching may also be triggered by the following methods. For the UE configured with the NES mode, a 'search space set group switching flag' in DCI format 2_0 may indicate an SSSG index to be switched, and at the same time, may trigger the SSSG switching (similar to conventional SSSG switching). As another method, a separate flag and/or indicator may be defined in DCI format 2_0. Each flag and/or indicator may be composed of 1 bit or more than 2 bits. The separately defined flag and/or indicator may trigger switching to the NES mode and indicate the SSSG to be switched. Alternatively, a separate group-common DCI may be used. In this case, the triggering point may be the reception time of the DCI. As a specific example, the triggering point may be the last symbol of a PDCCH containing the DCI. Meanwhile, when the UE switches from the non-NES mode to the NES mode (or vice versa), a separate timer may be configured (set). The timer value (a non-zero integer) may be configured through RRC signaling. The timer value may decrease in slot units, and when the timer value reaches 0, the SSSG switching may be triggered. Alternatively, the SSSG switching may be triggered at the end point of the NES mode (or non-NES mode). In this case, the end point of the NES mode (or non-NES mode) may refer to the last symbol of a period corresponding to the NES mode (or non-NES mode). The period corresponding to the NES mode (or non-NES mode) may be predefined or configured via RRC signaling. Alternatively, the period corresponding to the NES mode (or non-NES mode) may be configured through a separate specific procedure. Alternatively, the period corresponding to the NES mode (or non-NES mode) may be indicated and/or configured by DCI that triggers switching to the NES mode (or non-NES mode) through the SSSG switching.

The SSSG switching may be applied after a "certain time (P_switch)" from the triggering point. After the SSSG switching is triggered, the UE may switch to the NES mode (or non-NES mode) starting from the beginning of the earliest slot in the time domain, after P_switch symbols, which are configured separately or predefined. Alternatively, the exact point in time for switching to the NES mode may be explicitly indicated and/or configured by DCI that triggers the SSSG switching. The point in time for switching to the NES mode may be indicated relative to the triggering point, such as "the earliest slot after X symbols from the triggering point." The point in time for switching to the NES mode may also be indicated by a value based on the SFN (or slot index). The latter method may be useful when multiple UEs are instructed to switch to the NES mode at the same time.

The SSSG switching may be configured as switching between SSSGs within different BWPs. For example, if up to two SSSGs are configured for each BWP, and two SSSGs are configured for a BWP for the non-NES mode and two SSSGs are configured for a BWP for the NES mode, the SSSG switching may be configured as switching between the four SSSGs.

On the other hand, energy saving of the BS may be applied in various forms. For example, the number of times that data or control signals/channels are transmitted/received to/from the UE may be reduced for a certain period. Alternatively, the UE may perform no transmission/reception for a certain period. Additionally, the energy consumed by the BS may be reduced by not using specific frequency resources for a certain period. Alternatively, the rank and/or layer of a data transmission channel may be reduced. The power of the data transmission channel may also be reduced. Periodic/aperiodic signal transmission may be restricted. Each of these modes may be referred to as the NES mode in the time domain, the NES mode in the frequency domain, the NES mode for the spatial domain, the NES mode for the power domain, etc. Each mode may be represented as NES mode #k, where k=1, 2, ..., N, for convenience of explanation. In this case, NES mode #k may be understood as a specific configuration method (for NES purposes).
- The aforementioned SSSG switching may be a method of indicating and/or configuring switching between a specific SSSG corresponding to the non-NES mode operation and another specific SSSG corresponding to the NES mode operation. However, a method of distinguishing specific configuration methods for NES (i.e., specific NES modes) and indicating switching to NES mode #k may be used. The specific configuration methods for NES (or specific NES modes) may be predefined or configured via RRC signaling. In this case, different SSSG indices are assigned for each NES configuration method (or depending on the specific NES modes). When an SSSG index is indicated by DCI triggering the SSSG switching, a specific NES configuration method (or NES mode #k) may be applied. For example, SSSG #0 may be mapped to the non-NES mode, SSSG #1 may be mapped to NES mode #1, and SSSG #2 may be mapped to NES mode #2. During the SSSG switching, a specific SSSG index may be indicated by DCI. The methods listed below may be used to perform switching between the N NES modes via the SSSG switching. However, the application of the methods is not limited to specific situations, and the methods may be used more generally.
- As one method therefor, the SSSG switching and BWP switching may be indicated jointly. That is, an index combination (n, k) may be indicated simultaneously with an SSSG switching trigger such that switching to a k-th SSSG configured in an n-th BWP may be performed by the SSSG switching. For example, the SSSG may switch from SSSG #1 configured in BWP #1 to SSSG #2 configured in BWP #2 or to SSSG #3 configured in BWP #3.
- As another method, up to N SSSGs may be configured in a single NES-BWP. Alternatively, for a UE/cell configured with the NES mode, up to N SSSGs may be configured in some BWPs. In this case, N may be predefined or set via RRC signaling. To indicate one of the N SSSGs through the SSSG switching, DCI triggering the SSSG switching may include ceil{log2(N)} bits. In this case, the aforementioned SSSG switching operation may be used for switching between a specific SSSG (e.g., SSSG #0) and another specific SSSG (e.g., SSSG #1), or the SSSG switching operation may be used for switching between a specific SSSG (e.g., SSSG #0) and multiple specific SSSGs (e.g., {SSSG #1, SSSG #2, ..., SSSG #N}). In the latter case, for example, SSSG #1, SSSG #2, ..., SSSG #N may be mapped to N different NES configuration methods (or NES mode #k).
- As another method, one of two SSSGs configured in a BWP may be defined as an SSSG for the NES mode (NES-SSSG). An NES mode (or specific configuration value/method) to be applied when switching to the NES-SSSG based on the SSSG switching may be configured via RRC signaling. Accordingly, the number of SSSGs configured per BWP may remain a maximum of 2, while more NES modes (e.g., more than two modes) may be used through the SSSG switching. In this case, DCI triggering the SSSG switching may include a 1-bit field.

In the SSSG switching operation, when an RRC parameter 'cellGroupsForSwitchList' is configured, multiple cells are grouped, and the SSSG switching may occur simultaneously for all cells within a group. The cell group concept may also be applied to the SSSG switching operation for switching to the NES mode. When the different NES configuration methods (or NES mode #k) are assigned to each cell group, the value of k that distinguishes cell groups may be indicated along with the SSSG switching. Accordingly, the SSSG switching may be triggered only for a cell group corresponding to the indicated k value. To this end, for each cell configured for the UE, separate cell groups may be configured for different NES modes. Therefore, a single cell may belong to multiple cell groups. For example, for a UE configured with three cells, if cell #1 is configured for a cell group for both NES mode #1 and NES mode #2, cell #2 is configured only for NES mode #1, and cell #3 is configured only for NES mode #2, cell groups for NES mode #1 may be {cell #1, cell #2}, and cell groups for NES mode #2 may be {cell #1, cell #3}. In this case, if the SSSG switching indicates mode #1 and is triggered from cell #1 or cell #2, {cell #1, cell #2} may simultaneously switch to NES mode #1. If the SSSG switching indicates mode #2 and is triggered from cell #1 or cell #3, {cell #1, cell #3} may simultaneously switch to NES mode #2.

Additionally, the parameter configuration methods related to the SSSG switching may be the same as those defined in Table 5. When the NES mode (or an equivalent operational mode) is configured for the UE, the configuration values for some/specific SSSGs (and/or SS sets in the corresponding SSSGs) may be reinterpreted for NES purposes. For example, when NES-related operations are not configured for a UE configured with SSSG #0 and SSSG #1, the configuration values for each SSSG (or SS sets in the corresponding SSSG) may be applied as configured by RRC (without any changes). However, if the NES-related operations are configured for the UE, the configuration values for each SSSG (or SS sets in the corresponding SSSG) may be applied differently from the originally configured values. As an example thereof, assuming that the periodicity of SS sets included in SSSG #1 is set to 16 slots, when the NES operation is configured for the UE, the periodicity of the SS sets in SSSG #1 may be applied as greater than 16 slots (e.g., scaled by a factor of N). Accordingly, without separate signaling to change the configuration values of SS sets configured for the non-NES mode, the operation of the BS and UE in the NES mode may be configured differently from the non-NES mode.

Additionally, in the conventional non-NES mode, the configuration of the Type-3 CSS and/or USS (e.g., SearchSpace configuration values) may be changed through the SSSG switching. However, the configuration values of other types of SS sets (e.g., Type 0 CSS, Type 1 CSS) are not changed. The SSSG switching for the NES mode described above may operate in such a way that the configuration values for SS sets of any type are changed. For example, as mentioned above, when the UE switches to the NES mode through the SSSG switching, the configuration values for the Type-0/0A/1/2 CSS may be changed differently for each SSSG. Once the NES mode is initiated through the SSSG switching, both the BS and UE may operate with configuration values different from those in the non-NES mode to transmit and receive a relevant CSS and a PDCCH therefor.

The proposed methods for the SSSG switching may also be applied through PDCCH monitoring adaptation to be described in Method [2] below. In this case, the index of an SS set group is configured via separate RRC signaling (e.g., searchSpaceGroupIdList), and a group index may be indicated through a separate DCI field (e.g., a PDCCH adaptation field introduced in DCI 0_1, 0_2, 1_1, and 1_2 in NR Rel-17).

### [2] Switching to NES mode (or non-NES mode) using PDCCH monitoring skipping/adaptation.

PDCCH skipping and PDCCH monitoring adaptation fields, introduced in NR Rel-17 for the purpose of UE power saving, may be used for switching to the NES mode. The PDCCH monitoring adaptation field may also be expressed as a PDCCH monitoring adaptation indication field. As specified in Table 5, a PDCCH skipping duration value set and an SS set group index are configured through RRC parameters such as PDCCHSkippingDurationList and/or searchSpaceGroupIdList. DCI formats 0_1, 0_2, 1_1, or 1_2 transmitted to the UE include a 1-bit or 2-bit PDCCH monitoring adaptation field. A skipping configuration for a specific PDCCH or an SSSG switching configuration is indicated by the field. Specifically, the UE is configured with the SS set group index for the Type-3 CSS or USS set via searchSpaceGroupIdList. The UE receives the corresponding SS set group index through the PDCCH monitoring adaptation field in DCI and performs the PDCCH monitoring operation based on the values/operations configured for the group.

When the UE is configured with the NES operation, the UE may be configured and/or instructed to switch to the NES mode (or non-NES mode) through the RRC parameters. In this case, the methods proposed in Section [1] may be applied in the same manner. For example, among SSSGs configured for the UE, some (or specific) SSSGs may be configured for the NES mode, while other (or different specific) SSSGs may be configured for the non-NES mode.

For example, if the indices of three SSSGs are configured via RRC signaling (e.g., searchSpaceGroupIdList), and if a specific SSSG is indicated through the PDCCH monitoring adaptation field in DCI, the UE may operate in a similar manner to the SSSG switching described in Section [1]. In this case, to switch the UE to the NES mode, an SSSG configured for the NES mode may be indicated.

As another example, among skipping durations configured for the UE, some (or specific) durations may be configured for the NES mode, while other (or different specific) durations may be configured for the non-NES mode. When a specific duration is indicated through the PDCCH monitoring adaptation indication field in DCI, the UE may operate in a similar manner to the SSSG switching described in Section [1]. In this case, to switch the UE to NES mode, a duration mapped to the NES mode may be indicated.

Multiple UEs (or cell-specific UEs) may be configured and/or instructed to switch to the NES mode through the PDCCH monitoring adaptation field. A list of multiple group indices containing SS set groups configured for the NES mode is configured through cell-specific RRC signaling. Subsequently, the group indices may be indicated through group-common DCI. The UE configured with the NES operation may receive a group index associated with a specific NES mode via the group-common DCI, among the groups defined through the RRC signaling. The UE may switch to and operate in the corresponding NES mode. The group-common (GC) DCI may use GC-DCI (e.g., DCI format 2_0) supported in Rel-17 NR, or a separate GC-DCI may be defined. In this case, the separate DCI field may be used to indicate the group index. When the number of groups configured by RRC is (at most) N, the bit width of the DCI field may be (at most) ceil{log2(N)}.

Multiple UEs (or cell-specific UEs) may be configured and/or instructed to switch to the NES mode through PDCCH skipping. That is, multiple durations are configured through cell-specific RRC signaling. Subsequently, a specific duration among the multiple durations may be indicated via GC-DCI. The UE configured with the NES operation may receive a duration associated with a specific NES mode from the GC-DCI, among the multiple durations configured through the RRC signaling. The UE may switch to and operate in the corresponding NES mode. The aforementioned GC-DCI may use GC-DCI (e.g., DCI format 2_0) supported in Rel-17 NR, or a separate GC-DCI may be defined. In this case, the separate DCI field may be used to indicate the duration. When the number of durations configured by RRC is (at most) M, the bit width of the DCI field may be (at most) ceil{log2(M)}.

Alternatively, when the PDCCH skipping is configured for the UE configured with the NES operation (NES mode), the UE may operate in the NES mode only when the configured PDCCH skipping duration value is above a predetermined threshold. Otherwise, the UE may operate in the non-NES mode.

For example, the threshold value K may be configured via RRC signaling. When the UE operates in the non-NES mode (or NES mode), if the value of a configured/indicated PDCCH skipping duration is smaller (or larger) than K, the UE may maintain the non-NES mode (or NES mode) and perform the configured/indicated PDCCH skipping. If the value of the configured/indicated duration is greater (or smaller) than K, the UE may switch to the NES mode (or non-NES mode). In this case, the configured/indicated skipping duration may be determined as a duration during which the NES mode is maintained. Alternatively, a specific offset value may be added to the configured skipping duration, or a specific scaling value may be multiplied to determine the duration for the NES mode. Alternatively, the duration for which the NES mode is maintained may be predefined. In this case, after the duration passes, the UE may switch back to the non-NES mode (without a separate indication). For example, if a skipping duration larger than the threshold K is indicated to the UE operating in the non-NES mode, the UE may switch to the NES mode. In this case, once the duration passes, the UE may return to the non-NES mode. Additionally, the operation of switching to the NES mode during the skipping duration may be applied only to a specific cell (or BWP) or specific frequency resources (e.g., a specific range of RBs).

### [3] A method of handling a scheduled PDSCH/PUSCH and/or a configured PDSCH/PUSCH when the BS/UE switches to the NES mode or when switching to the NES mode is indicated

The BS/UE operating in the NES mode may be configured in various ways. For example, the BS/UE operating in the NES mode may not transmit (or receive) a PDSCH (or PUSCH). When the NES mode is configured by a specific configuration (or procedure) that includes the aforementioned switching operation to the NES mode (or when the BS/UE switches to the NES mode), PDSCH reception (or PUSCH transmission) may already be scheduled to the UE or configured by higher layers. Channels/signals such as a PDSCH/PUSCH may be handled through one of the following methods.

Method [3-1]: When the NES mode is configured/indicated to the UE via DCI scheduling PDSCH reception (or PUSCH transmission), the UE may switch to NES mode immediately after receiving the scheduled PDSCH (or transmitting the scheduled PDSCH). In this case, HARQ feedback for the PDSCH (or PUSCH) may not be transmitted or expected by the UE/BS.

Method [3-2]: When the NES mode is configured/indicated to the UE via DCI scheduling PDSCH reception (or PUSCH transmission), the UE may switch to the NES mode after receiving the scheduled PDSCH (or transmitting the scheduled PDSCH) and waiting for a specific time (T1). In this case, HARQ feedback for the PDSCH (or PUSCH) may not be transmitted or expected by the UE/BS. Alternatively, regardless of whether the HARQ feedback for the PDSCH (or PUSCH) is an ACK or NACK, the UE may switch to the NES mode after T1.

Method [3-3]: When the NES mode is configured/indicated to the UE via DCI scheduling PDSCH reception (or PUSCH transmission), the UE may switch to the NES mode after receiving the scheduled PDSCH (or transmitting the scheduled PDSCH) and transmitting HARQ feedback for the PDSCH (or PUSCH) (if the HARQ feedback is an ACK). If the PDSCH (or PUSCH) is not successfully transmitted/received or decoded, resulting in a NACK, the PDSCH (or PUSCH) may be retransmitted. Once the HARQ feedback is an ACK, the UE may switch to the NES mode.

Method [3-4]: When the NES mode is configured/indicated to the UE via DCI scheduling PDSCH reception (or PUSCH transmission), the UE may switch to the NES mode after receiving the scheduled PDSCH (or transmitting the scheduled PUSCH) and transmitting HARQ feedback as an ACK, or the UE may switch to the NES mode after receiving the scheduled PDSCH (or transmission the scheduled PUSCH) and waiting for a specific time (T2). That is, the PDSCH (or PUSCH) may be retransmitted until the HARQ feedback therefor is an ACK. Once the ACK is transmitted, the UE may switch to the NES mode immediately after transmitting the ACK, or the UE may switch to the NES mode after waiting for a specific time (T3) following the ACK transmission. If the HARQ feedback is not an ACK within T2, the UE may switch to the NES mode (without further retransmission) after T2 from the initial reception of the PDSCH (or the initial transmission of the PUSCH),

Method [3-1], [3-2], [3-3], or [3-4] described above may also be applied to a PDSCH (or PUSCH) that is scheduled by other DCI or configured via higher layers, even before switching to the NES mode is configured/indicated.

After the UE is configured/indicated to switch to the NES mode, the UE may drop/ignore PDSCH reception (or PUSCH transmission) scheduled by separate DCI.

Signals/channels for CSI reporting and measurement in the form of periodic, semipersistent, and/or aperiodic configurations, which are already configured for the UE, may be immediately deactivated (suspended or released) when the UE is instructed to switch to the NES mode. The signals/channels may include a CSI-RS, an SRS, a data channel (e.g., SPS-PDSCH), and so on. The UE may switch to the NES mode after the deactivation. Alternatively, after a specific time (T4) from receiving the configuration/indication, the signals/channels may be deactivated, and the UE may switch to the NES mode.

In the methods above, T1, T2, T3, and T4 may be predefined as absolute time values (e.g., in milliseconds) or configured through RRC signaling. Alternatively, T1, T2, T3, and T4 may be predefined as specific number of slots and/or symbols or configured through RRC signaling. When multiple NES modes are configured, these values may be configured individually for each NES mode. Alternatively, separate timers (or counters) may be used for each of T1, T2, T3, and T4.

The "scheduled PDSCH/PUSCH and/or configured PDSCH/PUSCH handling methods" proposed in Section [3] may be configured/applied independently of the method of switching to the NES mode. For example, the methods may be specifically applied to the NES mode switching methods through the SSSG switching and/or PDCCH monitoring skipping/adaptation proposed in Sections [1] and/or [2].

The "scheduled PDSCH/PUSCH and/or configured PDSCH/PUSCH handling methods" proposed in Section [3] may be selectively configured/applied only to specific control/data channels. For example, when switching to the NES mode based on the PDCCH monitoring adaptation method proposed in Section [2], a series of DL receptions (e.g., DL signals/channels transmitted in the P/SP form, such as a CSI-RS, an SPS PDSCH, etc.) may be configured to be skipped except for PDCCH monitoring. As another example, when switching to the NES mode based on the PDCCH skipping method proposed in Section [2], a series of DL receptions including PDCCH monitoring (e.g., DL signals/channels transmitted in the P/SP form, such as a CSI-RS, an SPS PDSCH, etc.) may be configured to be skipped.

### [4] A method of applying different configurations for the proposed methods based on a discontinuous reception (DRX) configuration

The NR (e.g., Rel-17) standard specifies DRX configurations/operations. The features of DRX, which are used to reduce unnecessary power consumption for the UE, are as follows.

DRX defines two structures: one structure for UEs in the RRC_IDLE state (referred to as I-DRX) and one structure for UEs in the RRC_CONNECTED state (referred to as C-DRX). The two DRX structures are defined such that a period during which the UE may expect to receive DL signals (e.g., active time period or on duration period) occurs periodically to reducing unnecessary power consumption during other periods. For reference, in the case of C-DRX, the start of the on-duration period occurs periodically. The size of a configurable cycle (i.e., DRX cycle) may be determined/configured through higher layer signaling, such as RRC signaling, provided by the BS to the UE.

In the present disclosure, DRX may refer to C-DRX and/or I-DRX.

In the present disclosure, a period during which the UE (configured with DRX) may expect to receive DL signals within the DRX cycle may be expressed as the DRX active time (or on-duration).

When the UE is configured with DRX, the configuration/application of the proposed methods mentioned above (i.e., Methods [1] to [3]) may vary between the DRX active time and other time periods. For example, the proposed methods may be applied/configured during the DRX active time and may not be applied/configured during other periods. Alternatively, the proposed methods may not be applied/configured during the DRX active time (i.e., operating in the non-NES mode) and may be applied/configured during other periods for the NES mode operation.

When the UE is configured with DRX, the proposed methods above may apply different configurations between the DRX active time and other periods within the DRX cycle. For example, the SSSG switching-related operations described in Section [1] may be configured separately for the DRX active time and other time periods. Alternatively, the operations related to PDCCH monitoring adaptation or PDCCH skipping described in Section [2] may be configured differently for the DRX active time and other time periods. Alternatively, the UE may operate in the NES mode during the DRX active time and in the non-NES mode during other periods. On the other hand, the UE may operate in the non-NES mode during the DRX active time and in the NES mode during other periods.

For multiple DRX configurations, the proposed methods above may be applied differently for each DRX configuration. That is, the UE may operate in the NES mode for some DRX configurations (or when the UE receives the DRX configurations), and the UE may operate in the non-NES mode for other DRX configurations (or when the UE receives the other DRX configurations). In this case, one of the multiple DRX configurations (i.e., DRX configuration switching) may be one DRX configuration configured/indicated through RRC signaling (GC-DCI or MAC-CE) among N DRX configurations provided to the UE via (UE-dedicated) RRC signaling.

For example, when the UE operates in an NES BWP (or non-NES BWP) according to DRX configuration #1, if the DRX configuration switches to DRX configuration #2 (due to the indication of DRX configuration switching), the UE may switch to a non-NES BWP (or NES BWP).

For multiple DRX configurations, the proposed methods above may be applied differently for each DRX configuration. That is, for some DRX configurations (or when the DRX configurations are provided), a specific one of the proposed methods may be applied/configured, and for other DRX configurations (or when the other DRX configurations are provided), a different specific one of the proposed methods may be applied/configured.

The proposed methods above may be configured/applied differently for each BWP. That is, for some BWPs (or when the BWPs are an active BWP), the UE may operate in the NES mode, and for other BWPs (or when the other BWPs are an active BWP or when a BWP operating in the NES mode is changed to an inactive BWP), the UE may operate in the non-NES mode.

In the proposed methods above, the above-described timers related to the NES mode (or non-NES mode) may be paused (held) or (re)started during the NES mode (or non-NES mode). Alternatively, the timer may be paused during the DRX active time (or other time periods).

Additionally, for example, during the NES mode (e.g., NES duration), the timer may remain paused without decreasing or increasing, and once the NES mode (e.g., NES duration) ends, the counting operation may resume.

Additionally, an SCS for determining slots where the timer decreases (for instructing NES mode switching) may be configured based on a smaller value between the SCS of a PDCCH and the SCS of the timer domain (e.g., PDSCH). Alternatively, the SCS for determining slots where the timer decreases may be configured based on the smallest SCS between the SCS of a PDCCH and the SCS of a PDSCH (SCS in the active or inactive state).

Additionally, when multiple cells are linked to the timer (and related configurations/operations), (which may be preconfigured via RRC signaling), the timer may be configured or operated for each cell group.

In the proposed methods above, when multiple cells are configured for the UE configured with DRX, to operate only some specific cells in the NES mode (or non-NES mode), the UE may group cells that belong to the same DRX configuration (or DRX group) in advance and configure the timer to operate on a cell group basis. The operation of the timer includes incrementing, decrementing, pausing, and (re)starting the timer.

### [5] A method of indicating some DRX configuration to be actually applied among multiple DRX configurations when the multiple DRX configurations are configured

In the present disclosure, the DRX configuration may be a DRX configuration configured for idle/inactive UEs. Alternatively, the DRX configuration may be a C-DRX configuration configured for connected UEs. Alternatively, the DRX configuration may also be a configuration where the DTX and/or DRX patterns of the BS are configured in a cell-specific (or UE group-common) manner (referred to as cell DTX/DRX for convenience). The BS may preconfigure multiple DRX configurations for various purposes and indicate one or more DRX configurations to be applied among the DRX configurations.

For example, the SSSG switching described in Method [1] may be used. Specifically, among SSSGs configured for the UE, some (or specific) SSSGs are configured for DRX configuration #1 (e.g., C-DRX configuration), while other (or different specific) SSSGs are configured for DRX configuration #2 (e.g., cell DTX/DRX). Switching between DRX configuration #1 and DRX configuration #2 may be indicated through the SSSG switching between two different SSSGs. Specifically, the start of DRX configuration #1 or the end of DRX configuration #1 may be indicated. In this case, the switching mechanisms, triggering conditions, and/or related parameter configurations (e.g., P_switch) for the SSSG switching may be configured according to the methods disclosed in Table 5. Alternatively, switching mechanisms, triggering conditions, and/or related parameter configurations (e.g., P_switch) different from those in Table 5 may be applied to the UE.

As another example, the PDCCH monitoring/skipping described in Method [2] may be used. Specifically, among skipping durations configured for the UE, some (or specific) durations are configured for DRX configuration #1 (e.g., C-DRX configuration), while other (or different specific) durations are configured for DRX configuration #2 (e.g., cell DTX/DRX). When a specific duration is indicated through the PDCCH monitoring adaptation field in DCI (in a manner similar to the SSSG switching described above), a DRX configuration to be applied may be indicated.

As another example, a DRX configuration index to be applied may be indicated through a mechanism similar to activation (or deactivation) DCI (for an SPS or type2 CG). For instance, for DCI scrambled with a specific RNTI (e.g., SPS-C-RNTI or CS-RNTI), if specific validation conditions (e.g., when NDI value = 0 or when the FDRA field is all zeros or all ones) are met, a DRX configuration corresponding to a code point indicated by a specific field in the DCI (e.g., HARQ process index) may be activated or released (based on the validation conditions).

As another method, the BS may preconfigure SSSGs for SSSG switching for each DRX configuration (for various purposes), and an SSSG to be monitored by the UE may change based on the DRX configuration currently applied to the UE.

Specifically, among SSSGs configured for the UE for SSSG switching, some (or specific) SSSGs are configured for DRX configuration #1 (e.g., C-DRX configuration), while other (or different specific) SSSGs are configured for DRX configuration #2 (e.g., cell DTX/DRX). Subsequently, PDCCH monitoring may be performed on an SSSG associated with a DRX configuration that is actually configured (or applied) to the UE among the two different DRX configurations. In this case, the switching mechanisms, triggering conditions, and/or related parameter configurations (e.g., P_switch) for SSSG switching associated with each DRX configuration may be configured in the same manner as described in Table 5. Alternatively, switching mechanisms, triggering conditions, and/or related parameter configurations (e.g., P_switch) different from those in Table 5 may be applied to the UE.

Alternatively, the BS may preconfigure PDCCH monitoring skipping/adaptation methods for each DRX configuration (for various purposes), and a PDCCH monitoring skipping/adaptation method to be applied by the UE may change based on the DRX configuration currently applied to the UE. Specifically, among skipping durations configured for the UE, some (or specific) durations are configured for DRX configuration #1 (e.g., C-DRX configuration), while other (or different specific) durations are configured for DRX configuration #2 (e.g., cell DTX/DRX). When the DRX configuration changes (or is configured), the UE may switch to and operate based on PDCCH monitoring skipping/adaptation associated with the (changed) DRX configuration.

According to the proposed methods, multiple DRX configurations are preconfigured, and a DRX configuration index to be applied or not applied is indicated through SSSG switching, PDCCH skipping/adaptation, and (de)activation DCI. Alternatively, multiple candidate values for (specific) parameters (e.g., offset values of DRX on-duration, DRX cycle, etc.) included in a single DRX configuration are configured. An actual value to be applied may be easily indicated through mechanisms such as SSSG switching, PDCCH skipping/adaptation, and (de)activation DCI.

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

### Implementation examples

FIG. 4 is a flowchart illustrating a resource configuration method according to embodiments of the present disclosure.

Referring to FIG. 4, a method of configuring an NES mode according to an embodiment of the present disclosure may be performed by the UE, and the method may include: receiving DCI (S501); performing SSSG switching or PDCCH monitoring skipping (S503); and switching to the NES mode (S505). In addition to the operations in FIG. 4, at least one of the operations described in Sections [1] to [5] may also be performed.

For example, referring to Section [1], the DCI may include an SSSG switching flag field in DCI format 2_0. Referring to Section [2], the DCI may be used for scheduling signals and/or channels such as a PDSCH, PUSCH, etc., and the DCI may include a PDCCH monitoring adaptation field.

Referring to Table 5, if the UE detects DCI format 2_0 and the value of the SSSG switching flag field is 0, the UE may stop PDCCH monitoring according to search space sets with group index 1 and start the PDCCH monitoring according to search space sets with group index 0. Additionally, if the UE detects DCI format 2_0 and the value of the SSSG switching flag field is 1, the UE may stop the PDCCH monitoring according to the search space sets with group index 0 and start the PDCCH monitoring according to the search space sets with group index 1.

In summary, based on the value of the SSSG switching flag, the UE performs the SSSG switching by starting the PDCCH monitoring according to search space sets with a first group index, while stopping the PDCCH monitoring according to search space sets with a second group index.

Referring to Section [1], each SSSG may be associated with the NES mode or non-NES mode. In Section [1], four types of NES modes are described: NES mode in the time domain, NES mode in the frequency domain, NES mode for the spatial domain, and NES mode for the power domain. However, the NES modes associated with each SSSG are not limited to the four types. Including NES modes not described in Section [1], the NES modes associated with each SSSG may be expressed as NES mode #1, NES mode #2, and so on. Additionally, in the following description, the NES modes may include non-NES mode.

Referring to Section [1], when the SSSG switching is performed, the NES mode also switches from an NES mode associated with an existing SSSG to an NES mode associated with a new SSSG. Therefore, when the PDCCH monitoring according to the search space sets with the first group index is started and the PDCCH monitoring according to the search space sets with the second group index is stopped, the UE may operate in a first NES mode associated with the search space sets with the first group index and release or deactivate the configuration of a second NES mode associated with the search space sets with the second group index.

Additionally, referring to Section [1], two SSSGs are configured within a single BWP. Accordingly, including switching between two SSSGs within a single BWP, switching may be configured between a total of 2N SSSGs, with two SSSGs for each of N different BWPs. As a result, switching between 2N NES modes is possible.

As an additional example, referring to Section [2] and Table 5, the PDCCH monitoring adaptation field may indicate the SSSG switching or PDCCH monitoring skipping based on the value thereof.

If the PDCCH monitoring adaptation field indicates starting the PDCCH monitoring according to the search space sets with the first group index and stopping the PDCCH monitoring according to the search space sets with the second group index, the UE applies the indication starting from the earliest slot after at least P_switch symbols from the last symbol in which the DCI is received

Once the indication is applied, that is, once the monitoring according to the search space sets with the first group index is started, the UE may operate in the first NES mode associated with the search space sets with the first group index and release or deactivate the configuration of the second NES mode associated with the search space sets with the second group index.

Additionally, the PDCCH monitoring adaptation field may indicate the PDCCH monitoring skipping for a specific duration. Referring to Table 5, different durations may be indicated based on the value of the PDCCH monitoring adaptation field. For example, if the value of the PDCCH monitoring adaptation field is a first value, a first duration from a set of durations may be instructed, and if the value is a second value, the second duration from the set of durations may be instructed. As the number of bits in the PDCCH monitoring adaptation field increases, the number of durations that may be indicated may also increase.

Similar to the SSSG, each duration may be associated with a different NES mode. Therefore, if the PDCCH monitoring adaptation field indicates the first value, the first NES mode may be configured, and if the PDCCH monitoring adaptation field indicates the second value, the second NES mode may be configured.

Additionally, referring to Section [3], if switching between NES modes is triggered by DCI for scheduling a channel (e.g., PDSCH or PUSCH), the UE may perform the switching between NES modes immediately after the transmission or reception of the channel is completed. The completion point of the transmission or reception may be the last symbol in which the channel is assigned. Although it is expressed as "immediately," the UE may switch the NES mode starting from a symbol immediately following the last symbol in which the channel is transmitted or received or starting from the earliest slot after the last symbol in which the channel is transmitted or received.

Alternatively, if switching between NES modes is triggered by DCI for scheduling a channel, the UE may perform the switching between NES modes after a predetermined period of time has passed following the completion of transmission or reception of the channel.

Alternatively, if switching between NES modes is triggered by DCI for scheduling a channel, the UE may perform the switching between NES modes only when HARQ feedback for the channel is an ACK. If the HARQ feedback for the channel is a NACK, the UE may retransmit or re-receive the channel and may not perform the switching between NES modes until the HARQ feedback is an ACK.

The embodiments described in each section may be combined and performed together. For example, after the second NES mode switches to the first NES mode based on the SSSG switching flag field disclosed in Section [1], the first NES mode may switch back to the first NES mode or switch to a separate third NES mode based on the PDCCH monitoring adaptation field disclosed in Section [2]. Alternatively, after the second NES mode switches to the first NES mode based on the SSSG switching flag field disclosed in Section [1], the second NES mode may switch back to the first NES mode or switch to the separate third NES mode based on DCI for scheduling a channel, disclosed in Section [3].

As another combinable embodiment, referring to Section [4], the application of the embodiments in Sections [1] to [3] may vary depending on the DRX configuration. For example, when first DRX is configured, the switching between NES modes is performed according to the embodiments described in Sections [1] to [3] of the present disclosure. However, when second DRX is configured, even if the SSSG switching or PDCCH monitoring skipping is indicated, the switching between NES modes may not be performed.

Alternatively, when the first DRX is configured, the NES mode switching may be performed based on the SSSG switching flag field. When the second DRX is configured, the NES mode switching may be performed based on the PDCCH monitoring adaptation field.

In addition to the operations described with reference to FIG. 4, one or more of the operations described with reference to FIGS. 1 to 3 and/or in Sections [1] to [5] may be combined and further performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

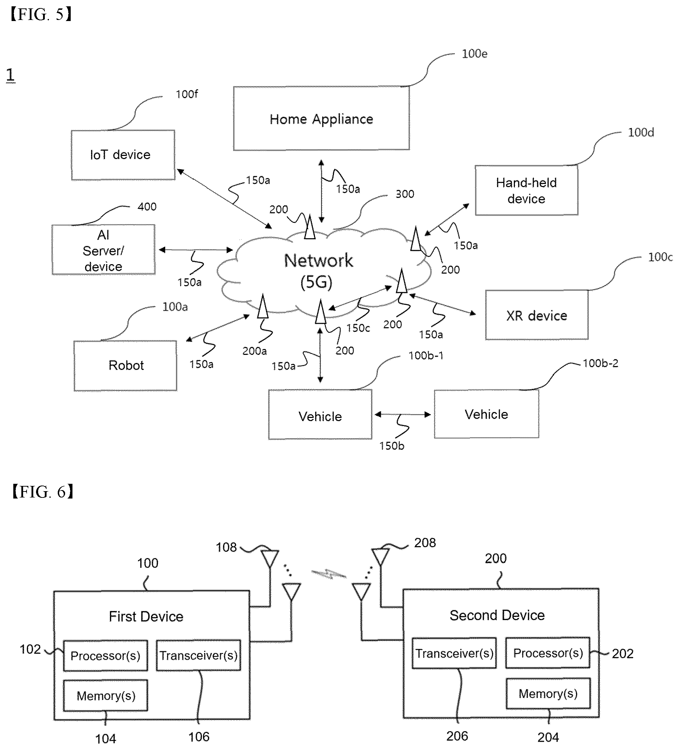

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

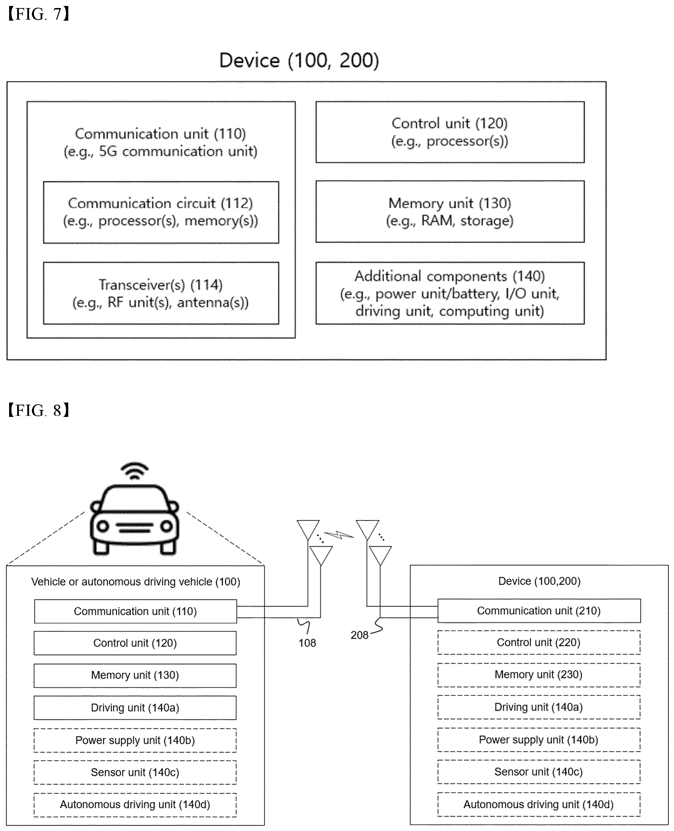

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of configuring a network energy saving (NES) mode by a user equipment (UE) in a wireless communication system, the method comprising:
receiving downlink control information (DCI) including a search space set group (SSSG) switching flag field;
performing SSSG switching based on a value of the SSSG switching flag field, wherein physical downlink control channel (PDCCH) monitoring according to search space sets with a first group index is started, and PDCCH monitoring according to search space sets with a second group index is stopped; and
based on the SSSG switching, performing switching from a second NES mode related to the search space sets with the second group index to a first NES mode related to the search space sets with the first group index.

2. The method of claim 1, wherein one of the first NES mode and the second NES mode is a non-NES mode.

3. The method of claim 1, wherein the search space sets with the first group index are configured in a first bandwidth part (BWP) (bandwidth part), and
wherein the search space sets with the second group index are configured in a second BWP.

4. The method of claim 1, wherein the first NES mode is one of four NES modes: an NES mode in a time domain, an NES mode in a frequency domain, an NES mode in a spatial domain, and an NES mode in a power domain, and
wherein the second NES mode is one of the four modes, which is different from the first NES mode.

5. The method of claim 1, further comprising:
receiving second DCI including a PDCCH monitoring adaptation field in the search space sets with the first group index;
based on the PDCCH monitoring adaptation field instructing the UE to start the PDCCH monitoring according to the search space sets with the second group index and to stop the PDCCH monitoring according to the search space sets with the first group index, starting the PDCCH monitoring according to the search space sets with the second group index from an earliest slot after at least P_switch symbols from a last symbol in which the second DCI is received;
based on the start of the PDCCH monitoring according to the search space sets with the second group index, performing switching from the first NES mode to the second NES mode.

6. The method of claim 1, further comprising:
receiving second DCI including a PDCCH monitoring adaptation field in the search space sets with the first group index;
skipping the PDCCH monitoring for a specific duration based on the PDCCH monitoring adaptation field, wherein a first value of the PDCCH monitoring adaptation field indicates a first duration in a set of durations, and a second value of the PDCCH monitoring adaptation field indicates a second duration in the set of durations;
based on the start of the skipping, maintaining the first NES mode based on that the specific duration is the first duration; and
based on the start of the skipping, performing switching from the first NES mode to the second NES mode based on that the specific duration is the second duration.

7. The method of claim 1, further comprising:
receiving second DCI for scheduling a channel in the search space sets with the first group index; and
performing switching from the first NES mode to the second NES mode from an earliest slot after a last symbol in which the channel is transmitted or received.

8. The method of claim 1, further comprising:
receiving second DCI for scheduling a channel in the search space sets with the first group index; and
performing switching from the first NES mode to the second NES mode from an earliest slot after a predetermined period of time from a last symbol in which the channel is transmitted or received.

9. The method of claim 1, further comprising:
receiving second DCI for scheduling a channel in the search space sets with the first group index; and
based on that hybrid automatic repeat request (HARQ) information for the channel is an acknowledgment (ACK), performing switching from the first NES mode to the second NES mode.

10. The method of claim 1, wherein based on that first discontinuous reception (DRX) is configured, switching from the second NES mode to the first NES mode is performed based on the SSSG switching, and
wherein based on that second DRX is configured, the switching from the second NES mode to the first NES mode is not performed based on the SSSG switching.

11. A user equipment (UE) configured to configure a network energy saving (NES) mode in a wireless communication system, the UE comprising:
at least one transceiver;
at least one processor; and
at least one memory operably connected to the at least one processor and storing instructions that, when executed, cause the at least one processor to perform specific operations comprising:
receiving downlink control information (DCI) including a search space set group (SSSG) switching flag field;
performing SSSG switching based on a value of the SSSG switching flag field, wherein physical downlink control channel (PDCCH) monitoring according to search space sets with a first group index is started, and PDCCH monitoring according to search space sets with a second group index is stopped; and
based on the SSSG switching, performing switching from a second NES mode related to the search space sets with the second group index to a first NES mode related to the search space sets with the first group index.

12. An apparatus for a user equipment (UE) configured to configure a network energy saving (NES) mode, the apparatus comprising:
at least one processor; and
at least one computer memory operably connected to the at least one processor and configured to, when executed, cause the at least one processor to perform operations comprising:
receiving downlink control information (DCI) including a search space set group (SSSG) switching flag field;
performing SSSG switching based on a value of the SSSG switching flag field, wherein physical downlink control channel (PDCCH) monitoring according to search space sets with a first group index is started, and PDCCH monitoring according to search space sets with a second group index is stopped; and
based on the SSSG switching, performing switching from a second NES mode related to the search space sets with the second group index to a first NES mode related to the search space sets with the first group index.

13. A computer-readable non-volatile storage medium comprising at least one computer program configured to cause a user equipment (UE) to perform operations, wherein the UE comprises at least one processor and is configured to configure a network energy saving (NES) mode, the operations comprising:
receiving downlink control information (DCI) including a search space set group (SSSG) switching flag field;
performing SSSG switching based on a value of the SSSG switching flag field, wherein physical downlink control channel (PDCCH) monitoring according to search space sets with a first group index is started, and PDCCH monitoring according to search space sets with a second group index is stopped; and
based on the SSSG switching, performing switching from a second NES mode related to the search space sets with the second group index to a first NES mode related to the search space sets with the first group index.
